# FASCICULE DE BREVET EUROPEEN

(11) **EP 1 093 200 B1**
(45) Date de publication et mention de la délivrance du brevet: **25.02.2009**
(21) Numéro de dépôt: 00402804.9
(22) Date de dépôt: 11.10.2000
(51) Int. Cl.: H02G 3/04, H02G 3/06

(54) **Accessoire à rapporter sur un socle de goulotte de cheminement de câbles électriques**
Zubehör zur Befestigung auf einem Kabelrinnensockel
Accessory to be mounted on the base of a raceway for electrical cables

(30) Priorité: 15.10.1999 FR 9912922
(43) Date de publication de la demande: 18.04.2001
(73) Titulaire: LEGRAND FRANCE, 87000 Limoges (FR); LEGRAND SNC, 87000 Limoges (FR)
(72) Inventeur: Piole, David, 72430 Avoise (FR); Decore, Bertrand, 72650 la Chapelle Saint Aubin (FR)
(74) Mandataire: Santarelli

(56) Documents cités:
- FR-A- 2 651 387
- FR-A- 2 772 200
- US-A- 3 562 402

## Description

La présente invention concerne de manière générale des accessoires à rapporter sur un socle de goulotte de cheminement de câbles électriques, et en particulier des accessoires dits de finition assurant une continuité de la protection des câbles lors des interruptions des tronçons de couvercle de fermeture de la goulotte, que ce soit au niveau du montage d'un appareillage, en bout de goulotte, ou à la formation d'un angle.

Plus particulièrement, l'invention concerne un accessoire à rapporter sur un socle d'une goulotte de cheminement de câbles électriques, muni d'une paroi pour masquer, à l'intérieur de la goulotte, un éventuel intervalle situé au-delà, suivant la direction longitudinale, d'un bord d'au moins un tronçon de couvercle.

On connaît déjà notamment du brevet français No 89 11267 publié sous le No 2 651 387, appartenant à la demanderesse, un accessoire de ce type, appelé communément joint de couvercle, et comportant une paroi plane apte à être positionnée sous des tronçons de couvercle adjacents, pour fermer le jeu pouvant apparaître entre les bords coupés des couvercles, lorsque la coupe de ces tronçons de couvercle n'est pas réalisée de manière parfaite.

Ainsi, un tel joint de couvercle permet d'empêcher le passage de tout objet entre les deux tronçons de couvercle et assure une continuité d'isolation de telle sorte que la goulotte reste conforme aux normes en vigueur.

Si un tel joint de couvercle donne entièrement satisfaction, notamment en ce qui concerne la conformité de la goulotte aux normes en vigueur, et également en terme de rapidité de pose pour les installateurs de goulotte qui privilégient ce paramètre, il ne convient pas toujours sur le plan esthétique, notamment lorsque la goulotte présente une largeur importante.

En effet, dans ce cas, les tronçons de couvercle de fermeture présentent également une largeur importante et leur coupe est d'autant plus délicate qu'elle peut conduire à un biaisage du bord de coupe plus important.

Ainsi, le jeu apparaissant entre les deux tronçons de couvercle juxtaposés peut être relativement conséquent laissant apparaître clairement le joint de couvercle, ce qui confère à la goulotte un aspect final peu esthétique.

Afin de pallier à cet inconvénient précité, il a été proposé, plus particulièrement pour des goulottes de grande largeur, d'associer au joint de couvercle un contre-joint recouvrant ledit joint ainsi que le bord coupé du ou des tronçon(s) de couvercle, celui-ci pouvant alors être coupé sans soin particulier.

Pour la mise en place sans grande difficulté du contre-joint, on utilise un support de contre-joint qui comporte généralement à chacune de ses extrémités devant être recouvertes par un tronçon de couvercle, un décrochement sur toute sa largeur contre lequel le tronçon de couvercle vient en butée.

Un tel support est notamment décrit dans la demande de brevet français No 97 15282 publiée sous le No FR 2 772 200, appartenant à la demanderesse.

Une telle solution donne satisfaction sur le plan de la conformité de l'ensemble aux normes en vigueur, et sur le plan esthétique, lorsque le contre-joint reproduit l'aspect externe et le coloris du couvercle de la goulotte.

Toutefois, lorsque le couvercle de la goulotte présente un motif décoratif réalisé lors de son extrusion ou en reprise, par exemple par la pose d'un revêtement imitant diverses textures telles que celles du bois, de la pierre ou autre, la présence d'un contre-joint injecté à l'interruption du couvercle, même s'il est d'un coloris coordonné à celui du décor du couvercle, n'est pas toujours du goût de l'installateur, qui préfèrera réaliser une pose jointive des tronçons de couvercle coupés à la longueur adéquate avec soin.

Par ailleurs, le document US 3 562 402 décrit un joint à positionner entre deux tronçons de couvercle, sans contre-joint, ce joint présentant sensiblement la forme d'un podium avec une partie de jonction venant se placer à effleurement de la surface externe desdits tronçons de couvercle, et une partie d'étanchéité venant se placer sous lesdits tronçons de couvercle.

La partie de jonction, qui peut constituer une surface de butée pour un bord d'un tronçon de couvercle, est solidaire de la partie d'étanchéité par boulonnage. Elle ne peut pas alors être retirée à la demande pour, par exemple, réaliser une pose jointive de tronçons de couvercle.

Par rapport à l'état de la technique précité, la présente invention propose un nouvel accessoire à rapporter sur un socle de goulotte de cheminement de câbles, simple de réalisation, peu coûteux, et qui donne à un installateur un repère de positionnement des bords coupés de tronçons de couvercle ou d'autres éléments à juxtaposer suivant la longueur dudit socle, en lui permettant de recouvrir ou non, à l'aide d'un contre-joint, les bords coupés, selon le soin qu'il désire apporter à la réalisation de la coupe desdits tronçons de couvercle ou autres éléments, et selon l'esthétique souhaitée pour l'ensemble de l'installation.

Plus particulièrement, selon l'invention, l'accessoire à rapporter sur un socle d'une goulotte de cheminement de câbles, est muni d'une paroi pour masquer, à l'intérieur de la goulotte, un éventuel intervalle situé au-delà, suivant la direction longitudinale, d'un bord d'un tronçon de couvercle, ladite paroi comportant sur l'avant un doigt saillant escamotable.

Dans sa position saillante, ledit doigt est adpaté à être positionné d'une part contre le bord d'un premier tronçon de couvercle et d'autre part contre le bord d'un second tronçon de couvercle ou contre un bord d'un autre élement, lors du montage de ces derniers sur le socle de la goulotte.

Ainsi, avantageusement grâce à l'invention, lors d'une interruption du couvercle de fermeture de la goulotte qui amène un installateur à couper ce couvercle en tronçons, et lorsque celui-ci souhaite installer un contre-joint, il utilise le doigt saillant de la paroi de l'accessoire monté sur ledit socle, pour mesurer la longueur adéquate des tronçons de couvercle à couper de façon à ce que les bords coupés des tronçons de couvercle viennent, lors du montage de ces derniers sur le socle de la goulotte, se positionner contre ledit doigt saillant en laissant subsister entre eux au maximum un intervalle réduit à la largeur de celui-ci.

Cet intervalle est tel qu'il autorise le passage de moyens d'encliquetage du contre-joint pour son assujettissement à l'accessoire.

Si l'installateur ne souhaite pas utiliser un contre-joint, il lui est facile d'escamoter le doigt saillant en le découpant à l'aide d'un outil coupant tel qu'une pince coupante, un cutter ou encore une scie.

D'autres caractéristiques avantageuses et non limitatives concernant des modes particuliers de réalisation de l'accessoire conforme à l'invention sont énoncées ci-après.

Le doigt vient de formation avec ladite paroi, et peut être soit découpable, soit repliable.

Cette dernière caractéristique est particulièrement avantageuse lorsque l'installateur réalise la coupe d'un tronçon de couvercle de telle sorte qu'il vienne bord à bord avec un autre élément juxtaposé suivant la longueur du socle. Dans ce cas, lors de la mise en place du tronçon de couvercle sur la goulotte, le doigt saillant de l'accessoire monté sur la goulotte s'escamote sous ledit tronçon de couvercle qui recouvre l'accessoire.

Une charnière d'articulation dudit doigt peut intervenir entre un bord de ce dernier et un bord d'une fenêtre de ladite paroi accueillant ledit doigt.

Avantageusement, ledit doigt peut comporter sur un bord libre au moins un ergot destiné à venir en butée contre une nervure prévue sur ladite paroi pour maintenir ledit doigt bloqué en position escamotée.

Le contre-joint suivant l'invention peut comporter sur une face interne tournée vers ladite paroi de l'accessoire, une nervure apte lors de son montage à escamoter ledit doigt dans ladite paroi.

Selon un autre mode de réalisation, ce contre-joint peut comporter, sur sa face interne tournée vers ladite paroi de l'accessoire, un logement de réception dudit doigt saillant de ladite paroi, lors de son montage.

L'accessoire selon l'invention peut constituer un joint de couvercle monté transversalement sur le socle de la goulotte de manière à assurer une continuité entre deux tronçons de couvercle sus-jacents, il peut également constituer un embout de goulotte avec une joue portant ladite paroi de manière qu'elle s'étend transversalement à ladite joue.

Enfin, il peut constituer également un angle, une dérivation ou un support de montage d'un appareillage électrique à rapporter sur le socle d'une goulotte.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective d'un ensemble comprenant un accessoire selon l'invention rapporté sur le socle d'une goulotte fermée par deux tronçons de couvercle de fermeture juxtaposés au niveau de l'accessoire ;
- la figure 2 est une vue de dessous de l'accessoire de la figure 1 et de son contre-joint ;
- la figure 3 est une vue schématique de côté de l'accessoire et du contre-joint de la figure 2 montés sur le socle de la goulotte ;
- les figures 4a et 4b sont des vues en coupe de l'accessoire de la figure 1, selon un plan vertical passant par le centre du doigt saillant dudit accessoire, lorsque ledit doigt est escamoté et est en saillie ;
- la figure 5 est une vue de détail du doigt saillant de l'accessoire selon l'invention ; et
- la figure 6 est une vue schématique de dessous de deux embouts de goulotte selon l'invention placés en grappe avec leur contre-joint.

Préliminairement, on notera que d'un mode de réalisation à l'autre de l'invention, représenté sur les différentes figures, les parties identiques ou similaires seront dans la mesure du possible référencées par les mêmes signes de référence et ne seront pas redécrites à chaque fois.

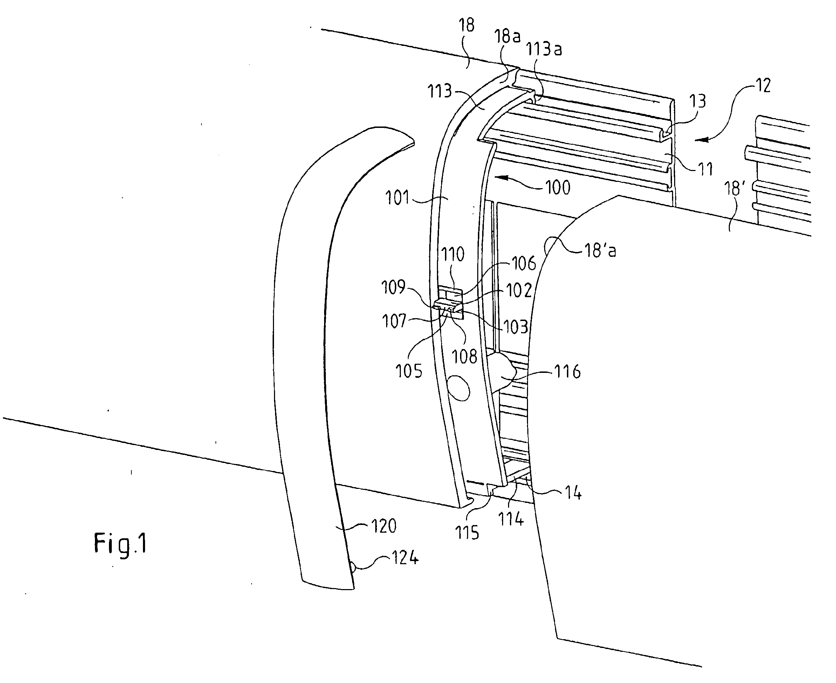

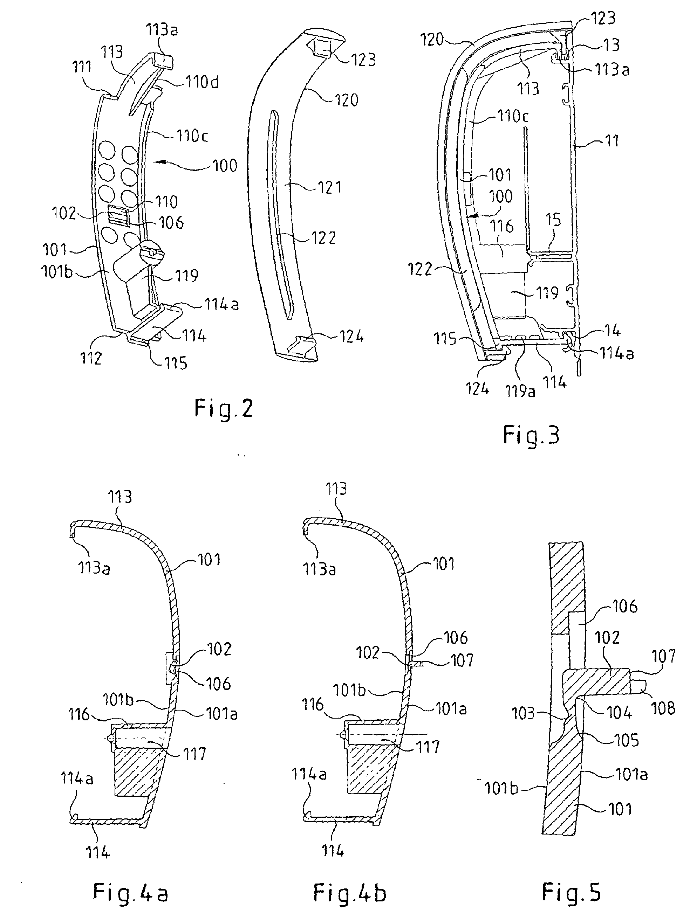

Sur les figures 1 et 3, on a représenté une goulotte 12 de cheminement de câbles électriques non représentés.

Une telle goulotte connue en soi sert de support, de logement et de protection de divers appareillages, notamment de divers appareillages électriques, ainsi que de logement des conducteurs pour la desserte électrique de ces appareillages.

Elle comporte de manière usuelle, un socle 11, ici essentiellement droit, pourvu intérieurement de plusieurs gouttières définissant différents compartiments ou canalisations pour le logement desdits câbles électriques et le montage de différents appareillages ou supports d'appareillage électrique.

Cette goulotte 12 est ici fermée par deux tronçons de couvercle 18, 18' présentant un profil courbe et pourvus sur leur surface interne de moyens d'engagement avec des moyens complémentaires prévus sur le socle 11, qui sont connus en soi et qui ne seront pas ici décrits dans le détail.

Comme le montrent les figures 1 à 5, il est prévu également, à l'interruption des deux tronçons de couvercle 18, 18', un accessoire 100 dit accessoire de finition qui est ici un joint de couvercle rapporté sur le socle 11 de la goulotte 12, de façon à établir une continuité de protection de câbles électriques entre les deux tronçons de couvercle 18, 18'.

Comme le montrent plus particulièrement les figures 2, 3, 4a et 4b, cet accessoire 100 comporte une paroi 101 pour masquer, à l'intérieur de la goulotte, l'intervalle situé, suivant la direction longitudinale de la goulotte, entre les deux bords coupés 18a, 18'a des tronçons de couvercle 18, 18'.

Selon l'exemple typique représenté sur ces figures, la paroi 101 de l'accessoire comprend, à chaque bord transversal d'extrémité 111, 112, une patte 113, 114 munie d'une dent d'encliquetage 113a, 114a destinée à être insérée élastiquement dans une gouttière 13, 14 prévue à proximité de chaque bord longitudinal du socle 11 de la goulotte 12, de manière à ce que le joint de couvercle soit monté transversalement sur le socle 11, de la même façon que les tronçons de couvercle 18, 18'.

Ici, la paroi 101 de l'accessoire 100 présente un profil courbe, et l'une des pattes d'encliquetage 113 présente un profil courbe identique, assurant une continuité avec celui de la paroi, de sorte que cette patte 113 forme un bord tombé de ladite paroi. Ce bord tombé 113 sert avantageusement à rigidifier la paroi 101 de l'accessoire.

L'autre patte d'encliquetage 114 s'étend essentiellement perpendiculairement à la paroi 101 et présente un profil droit.

Sur un bord longitudinal de la paroi 101 de l'accessoire 100, il est prévu une nervure 110c portée par la face arrière 101b de la paroi 101 et servant à la rigidification de l'ensemble. Une nervure de rigidification 110d est également prévue sur un bord longitudinal de la patte d'encliquetage 113 dudit accessoire. Les deux nervures 110c, 110d sont positionnées sur un même côté de l'accessoire sensiblement dans le prolongement l'une de l'autre.

En outre, la paroi 101 comporte sur sa face avant 101a un doigt saillant 102.

Ce doigt 102 vient de formation par moulage avec ladite paroi 101. Il est escamotable.

A cet effet, une charnière 103 d'articulation du doigt 102 intervient entre un bord 104 (voir plus particulièrement la figure 5) dudit doigt et un bord 105 d'une fenêtre 106 de la paroi 101 accueillant ledit doigt.

La charnière 103 d'articulation du doigt 102 vient de formation avec l'ensemble et est constituée par une languette élastique s'étendant sur une portion de cercle.

En outre, comme le montrent les figures 1 et 5, le doigt 102 de la paroi 101 de l'accessoire 100 comporte sur un bord libre 107 au moins un ergot, ici deux ergots 108, 109, destinés à venir en butée contre une nervure 110 prévue sur la paroi 101 pour maintenir ledit doigt bloqué en position escamotée.

Cette nervure 110 s'étend à partir d'un bord de la fenêtre 106 vers l'intérieur de ladite fenêtre et est positionnée sensiblement à mi-épaisseur de ladite paroi 101, de sorte qu'en position escamotée le doigt 102 n'est pas trop enfoncé à l'intérieur de ladite paroi 101 et la charnière 103 est toujours sollicitée élastiquement.

Comme on peut le voir sur les figures 1, 2 et 3, selon l'invention, il est prévu un contre-joint 120 destiné à recouvrir ladite paroi 101 de l'accessoire 100 ainsi que les bords 18a, 18'a des tronçons de couvercle 18, 18' positionnés de part et d'autre dudit doigt de manière adjacente à ce dernier, pour former une continuité de paroi externe entre les deux tronçons de couvercle 18, 18' et parfaire l'esthétique finale de l'ensemble.

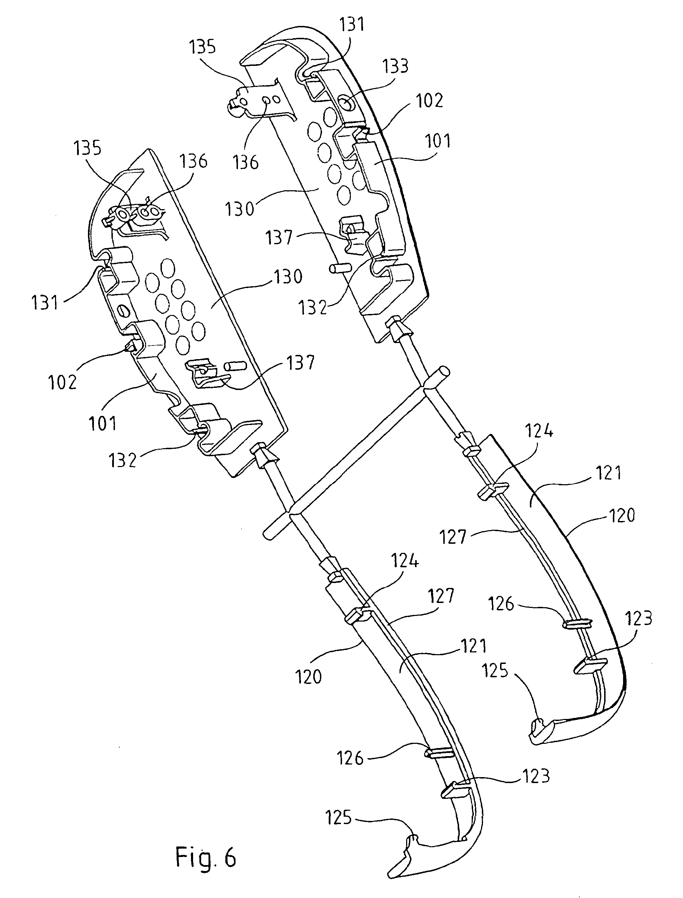

Bien entendu, selon d'autres modes de réalisation, on peut prévoir que le contre-joint soit destiné à recouvrir la paroi de l'accessoire positionné entre un bord d'un tronçon de couvercle et un bord d'un autre élément, tel qu'un embout de goulotte (voir figure 6) ou un support d'appareillage électrique, lesdits bords du tronçon et de l'autre élément étant positionnés de part et d'autre dudit doigt de manière adjacente à ce dernier.

Ce contre-joint 120 présente ici un profil courbe qui épouse celui de la paroi 101 de l'accessoire 100, et se positionne bord à bord avec les deux tronçons de couvercle 18, 18' pour assurer, entre ceux-ci, une continuité parfaite de la paroi externe de la goulotte fermée.

Avantageusement, le doigt 102 de l'accessoire présente une largeur déterminée de sorte qu'il laisse subsister, entre les bords adjacents 18a, 18'a des deux tronçons de couvercle 18, 18', un espace suffisant pour autoriser l'encliquetage du contre-joint 120 sur la paroi 101 de l'accessoire 100.

A cet effet, le contre-joint 120 porte sur sa face interne 121, à chacune de ses extrémités, des dents d'encliquetage 123, 124. L'accessoire 100 comporte, au niveau de la jonction entre la patte d'encliquetage 114 et la paroi 101, un petit rebord 115, en saillie selon la direction longitudinale de l'accessoire, qui sert de support pour l'encliquetage d'une patte d'encliquetage 124 du contre-joint. De plus, l'autre patte d'encliquetage 123 du contre-joint est destinée à s'insérer élastiquement dans la gouttière longitudinale 13 du socle 11 entre celui-ci et la dent d'encliquetage 113a de la patte d'encliquetage 113 de l'accessoire 100.

Le contre-joint 120 porte sur sa face interne 121 une nervure centrale 122, qui s'étend sur une partie de sa longueur, et qui, lors de son montage sur l'accessoire 100, vient escamoter le doigt saillant à l'intérieur de ladite paroi 101.

Par ailleurs, l'accessoire 100, ici le joint de couvercle représenté sur les figures 1 à 4b, comporte une colonnette 116 s'étendant à partir de la face arrière 101b de la paroi 101 vers l'intérieur de la goulotte. Cette colonnette 116 est percée d'un conduit 117 qui débouche à chaque extrémité par une ouverture, ce conduit formant un puits de réception d'une vis de fixation dudit joint de couvercle sur la goulotte, lorsqu'il est prévu d'utiliser ce joint de couvercle sans le contre-joint associé.

Comme le montre plus particulièrement la figure 3, la colonnette 116 comporte à son extrémité libre un plot de centrage destiné à se positionner dans un entonnoir de réception d'un logement de réception 15 d'une vis de fixation formé sur le socle 11 de la goulotte 12 de sorte que, lorsque l'accessoire 100 est positionné sur le socle 11, la colonnette 116 est positionnée correctement par rapport au logement de réception 15 de la vis de fixation de l'accessoire sur le socle.

Il est prévu, entre la colonnette 116 et la patte d'encliquetage 114 de l'accessoire 100, une nervure en baïonnette 119 permettant de rigidifier l'ensemble.

Au niveau du raccordement de la nervure 119 à la patte d'encliquetage 114, il est prévu des trous 119a pour permettre aisément de découper la patte d'encliquetage 114 en vue de l'utilisation du joint de couvercle 100 sans le contre-joint associé.

En effet, dans la forme de réalisation représentée, dans le cas où un installateur envisage d'utiliser le joint de couvercle 100 sans le contre-joint et de positionner bord à bord les deux tronçons de couvercle en recouvrant ledit joint de couvercle, il découpe les deux pattes d'encliquetage 113, 114 du joint de couvercle 100, et le fixe sur le socle par l'intermédiaire d'une vis introduite dans la colonnette 116 et dans le logement de réception 15 de la vis prévu à cet effet sur le socle de la goulotte. Puis, il positionne sur le joint de couvercle 100 les deux tronçons de couvercle 18, 18' correctement coupés de sorte qu'ils escamotent à l'intérieur de la paroi 101 du joint de couvercle le doigt saillant.

Comme le montrent clairement les figures, le découpage des pattes d'encliquetage 113, 114 du joint de couvercle 100 permet à ce dernier de se positionner aisément sous les tronçons de couvercle 18, 18', comme décrit ci-dessus.

Sur la figure 6, on a représenté en grappe un autre mode de réalisation de l'accessoire selon l'invention constitué ici par deux embouts de goulotte, un embout droit et un embout gauche. Chaque embout comporte une joue 130 destinée à fermer une extrémité de goulotte, et qui porte sur sa face interne ladite paroi 101 pourvue du doigt saillant 102.

Ici également, le doigt saillant 102 est escamotable à l'intérieur de ladite paroi 101 qui comporte à cet effet une fenêtre de réception dudit doigt pourvue, comme cela a été décrit précédemment, de la nervure de butée du doigt 102 en position escamotée.

La paroi 101 de chaque embout s'étend transversalement à ladite joue 130. Elle comporte également des moyens d'encliquetage d'un contre-joint 120 équivalent au contre-joint décrit précédemment en référence aux figures 1 à 3. Ici, les moyens d'encliquetage comportent des crans 131, 132 formés dans la paroi 101 coopérant avec des dents d'encliquetage 123, 124 prévues en saillie de la face interne 121 du contre-joint 120.

Comme cela est représenté sur la figure 6, la paroi 101 de chaque embout est destinée à être emmanchée entre une extrémité de couvercle et le socle de la goulotte. La fixation de cet embout est réalisée par l'intermédiaire de pattes de fixation 135, 137 comportant des orifices 136 pour le montage de vis de fixation.

En outre, chaque paroi 101 de chaque embout comporte un moyen de retenue latérale du contre-joint 120. Ce moyen de retenue latérale comprend un orifice 133 destiné à accueillir un téton 126 faisant saillie de la surface interne 121 du contre-joint 120.

Le contre-joint 120 représenté sur la figure 6 présente un profil courbe identique à celui du tronçon de couvercle venant fermer la goulotte de façon à assurer une continuité de paroi entre le bord externe courbe de la joue de l'embout et l'extrémité du tronçon de couvercle.

Il comporte une nervure de rigidification longitudinale 127 qui suit le profil du contre-joint. Cette nervure de rigidification 127 est ici prévue sur un bord longitudinal du contre-joint.

Enfin, le contre-joint 120 représenté sur la figure 6 comporte, outre les dents d'encliquetage 123, 124 sur l'embout, une dent 125 positionnée à l'extrémité recourbée du contre-joint et destinée à s'insérer dans une gouttière du socle de la goulotte prévue pour le montage d'un tronçon de couvercle.

Bien entendu, l'embout tel que représenté sur la figure 6 peut être utilisé sans le contre-joint. Dans ce cas, le tronçon de couvercle vient recouvrir la paroi 101 de l'embout en escamotant le doigt saillant 102 de telle sorte que le bord d'extrémité coupé dudit couvercle se place contre le bord externe de la joue dudit embout.

## Revendications

1. Accessoire (100) à rapporter sur un socle (11) d'une goulotte (12) de cheminement de câbles électriques, muni dune paroi (101) pour masquer, à l'intérieur de la goulotte (12), un éventuel intervalle situé au-delà, suivant la direction longitudinale, d'un bord (18a) d'au moins un tronçon de couvercle (18), ladite paroi (101) comportant sur l'avant un doigt saillant (102), **caractérisé en ce que** le doigt saillant (102) est escamotable et **en ce que** dans sa position saillante, ledit doigt (102) est adapté à être positionné d'une part contre le bord (18a) d'un premier tronçon de couvercle (18) et d'autre part contre le bord (18'a) d'un second tronçon de couvercle (18) ou contre un bord d'un autre élément, lors du montage de ces derniers sur le socle (11) de la goulotte (12).

2. Accessoire (100) selon la revendication 1, **caractérisé en ce que** ledit doigt (102) vient de formation avec ladite paroi (101).

3. Accessoire (100) selon l'une des revendications 1 ou 2, **caractérisé en ce que** le doigt saillant (102) est découpable.

4. Accessoire (100) selon l'une des revendications 1 ou 2, **caractérisé en ce que** ledit doigt (102) est repliable.

5. Accessoire (100) selon la revendication 4, **caractérisé en ce qu'**une charnière (103) d'articulation dudit doigt (102) intervient entre un bord (104) de ce dernier et un bord (105) d'une fenêtre (106) de ladite paroi (101) accueillant ledit doigt.

6. Accessoire (100) selon l'une des revendications 4 ou 5, **caractérisé en ce que** ledit doigt (102) comporte sur un bord libre (107) au moins un ergot (108,109) destiné à venir en butée contre une nervure (110) prévue sur ladite paroi (101) pour maintenir ledit doigt bloqué en position escamotée.

7. Accessoire (100) selon l'une des revendications 1 à 6, **caractérisé en ce qu'**il est prévu un contre-joint (120) destiné à recouvrir ladite paroi ainsi que le bord (18a) du tronçon de couvercle (18) et un bord (18a) d'un autre élément (18'), positionnés de part et d'autre dudit doigt de manière adjacente à ce dernier, pour former une continuité de paroi externe entre le tronçon de couvercle et ledit élément.

8. Accessoire (100) selon la revendication 7, **caractérisé en ce que** ledit doigt (102) présente une largeur déterminée de sorte qu'il laisse un espace suffisant entre lesdits bords (18a, 18'a) pour autoriser l'encliquetage du contre-joint (120) sur ladite paroi (101).

9. Accessoire (100) selon l'une des revendications 7 ou 8, **caractérisé en ce que** le contre-joint (120) comporte sur une face interne (121) tournée vers ladite paroi (101), une nervure (122) apte à escamoter ledit doigt (102) dans ladite paroi (101) lors de son montage.

10. Accessoire (100) selon l'une des revendications 7 ou 8, **caractérisé en ce que** le contre-joint comporte sur une face interne tournée vers ladite paroi, un logement de réception dudit doigt saillant de ladite paroi, lors de son montage.

11. Accessoire (100) selon l'une quelconque des revendications précédentes, **caractérisé en ce qu'**il constitue un joint de couvercle monté transversalement sur le socle (11) de la goulotte (12) de manière à assurer une continuité entre deux tronçons de couvercle (18, 18') sus-jacents.

12. Accessoire (100) selon la revendication 11, **caractérisé en ce qu'**il comprend, à chaque bord transversal d'extrémité (111,112), une patte (113,114) munie d'une dent d'encliquetage (113a, 114a) destinée à être insérée élastiquement dans une gouttière (13, 14) du socle (11) de la goulotte (12).

13. Accessoire (100) selon la revendication 12, **caractérisé en ce qu'**une des pattes d'encliquetage (113) présente un profil courbe assurant une continuité de profil avec ladite paroi (101) portant le doigt saillant (102), de sorte que ladite patte forme un bord tombé de ladite paroi.

14. Accessoire (100) selon l'une des revendications 11 à 13, **caractérisé en ce que** ladite paroi (101) porte sur sa face arrière (101 b) une colonnette (116) percée d'un conduit (117) ouvert à chaque extrémité et formant un puits de réception d'une vis de fixation de la paroi sur le socle de la goulotte.

15. Accessoire (100) selon l'une des revendications 1 à 10, **caractérisé en ce qu'**il constitue un embout de goulotte avec une joue (130) portant ladite paroi (101) de manière qu'elle s'étend transversalement à ladite joue.

16. Accessoire (100) selon la revendication 15, **caractérisé en ce que** ladite paroi (101) comprend des moyens d'encliquetage d'un contre-joint (120) destiné à assurer une continuité de paroi entre le bord externe de la joue (130) de l'embout et l'extrémité du tronçon de couvercle, ainsi qu'un moyen de retenu latéral dudit contre-joint (120) encliqueté sur ladite paroi (101).

17. Accessoire (100) selon la revendication 16, **caractérisé en ce que** lesdits moyens d'encliquetage comprennent des crans (131,132) coopérant avec des dents d'encliquetage (123, 124) portées par la face interne (121) du contre-joint (120) et ledit moyen de retenu comprend un orifice (133) recevant un téton (126) faisant saillie de la face interne (121) du contre-joint (120).

## Claims

1. Accessory (100) adapted to be attached to a base section (11) of trunking (12) for routing electrical cables, provided with a wall (101) for concealing, inside the trunking (12), any longitudinal gap beyond an edge (18a) of at least one length of cover section (18), said wall (101) having a projecting finger (102) on the front **characterized in that** the projecting finger (102) is retractable and **in that** said finger (102) is adapted, in its projecting position, to be positioned on the one hand against the edge (18a) of a first cover section (18) and on the other hand against the edge (18'a) of a second cover section (18) or against an edge of another element, when mounting these latter on the base section (11) of the trunking (12).

2. Accessory (100) according to claim 1, **characterized in that** said finger (102) is formed in one piece with said wall (101).

3. Accessory (100) according to claim 1 or 2, **characterized in that** said projecting finger (102) can be cut off.

4. Accessory (100) according to claim 1 or 2, **characterized in that** said finger (102) can, be bent.

5. Accessory (100) according to claim 4 **characterized in that** a hinge (103) for articulating said finger (102) is placed between one edge (104) of said finger and one edge (105) of a window (106) in said wall (101) receiving said finger.

6. Accessory (100) according to claim 4 or 5, **characterized in that** said finger (102) has on a free edge (107) at least one lug (108, 109) adapted to abut against a rib (110) provided on said wall (101) to immobilise said finger in its retracted position.

7. Accessory (100) according to any of claims 1 to 6, **characterised in that** provision is made for a joint cover (120) adapted to cover said wall and the edge (18a) of said length of cover section (18) and an edge (18a) of another element (18') adjacent respective opposite sides of said finger to form a continuous outside wall between the length of cover section and said element.

8. Accessory (100) according to claim 7, **characterized in that** said finger (102) has a width such that it leaves a sufficient gap between said edges (18a, 18'a) to enable the joint cover (120) to be clipped to said wall (101).

9. Accessory (100) according to claim 7 or 8, **characterized in that** the joint cover (120) has on an inside face (121) that faces towards said wall (101) a rib (122) adapted to push said finger (102) back inside the thickness of said wall (101) when it is fitted.

10. Accessory (100) according to claim 7 or 8, **characterized in that** the joint cover has on an inside face that faces towards said wall a housing for receiving said projecting finger of said wall when it is fitted.

11. Accessory (100) according to any preceding claim, **characterised in that** it constitutes a cover section joint mounted transversely on the base section (11) of the trunking (12) to assure continuity between two overlying lengths of cover section (18, 18').

12. Accessory (100) according to claim 11, **characterised in that** it includes at each transverse end edge (111, 112) a clip (113, 114) which has a rib (113a, 114a) adapted to be inserted elastically into a trough (13, 14) of the base section (11) of the trunking (12).

13. Accessory (100) according to claim 12, **characterized in that** one of the clips (113) has a curved profile to provide a continuous profile with the wall (101) carrying the projecting finger (102) so that said clip forms a drooping edge of said wall.

14. Accessory (100) according to any of claims 11 to 13, **characterized in that** said wall (101) carries on its rear face (101b) a column (116) with a passage (117) through it open at both ends and forming a well adapted to receive a screw for fixing the wall to the base section of the trunking.

15. Accessory (100) according to any of claims 1 to 10 **characterised in that** it constitutes a trunking termination with a flange (130) carrying said wall (101) so that it is transverse to said flange.

16. Accessory (100) according to claim 15, **characterized in that** said wall (101) includes means for clipping on a joint cover (120) adapted to provide a continuous wall between the outside edge of the flange (130) of the termination and the end of the length of cover section and means for laterally retaining said joint cover (120) clipped to said wall (101).

17. Accessory (100) according to claim 16, **characterized in that** said clipping means include detents (131, 132) cooperating with clips (123, 124) carried by the inside face (121) of the joint cover (120) and said retaining means include a hole (133) receiving a stud (126) projecting from the inside face (121) of the joint cover (120).

## Patentansprüche

1. Zubehör (100) zum Aufsetzen auf einen Sockel (11) eines Kabelkanals (12) zur Führung elektrischer Kabel, das mit einer Wand (101) versehen ist, um innen im Kabelkanal (12) einen eventuell vorhandenen Spalt, der in Längsrichtung jenseits eines Rands (18a) von wenigstens einem Deckelabschnitt (18) angeordnet ist, zu verdecken, wobei die Wand (101) an der Vorderseite einen vorstehenden Finger (102) umfasst,
**dadurch gekennzeichnet, dass** der vorstehende Finger (102) versenkbar ist und dass der Finger (102) in seiner vorstehenden Stellung einerseits an dem Rand (18a) eines ersten Deckelabschnitts (18) und andererseits an dem Rand (18'a) eines zweiten Deckelabschnitts (18) oder an einem Rand eines anderen Elements bei deren jeweiliger Anbringung auf dem Sockel (11) des Kabelkanals (12) positioniert zu werden vermag.

2. Zubehör (100) nach Anspruch 1,
**dadurch gekennzeichnet, dass** der Finger (102) an der Wand (101) angeformt ist.

3. Zubehör (100) nach einem der Ansprüche 1 oder 2,
**dadurch gekennzeichnet, dass** der vorstehende Finger (102) abtrennbar ist.

4. Zubehör (100) nach einem der Ansprüche 1 oder 2,
**dadurch gekennzeichnet, dass** der Finger (102) einklappbar ist.

5. Zubehör (100) nach Anspruch 4,
**dadurch gekennzeichnet, dass** ein Scharnier (103) zur gelenkigen Lagerung des Fingers (102) zwischen einem Rand (104) von diesem und einem Rand (105) eines Schlitzlochs (106) der Wand (101), angeordnet ist, die den Finger aufnimmt.

6. Zubehör (100) nach einem der Ansprüche 4 oder 5,
**dadurch gekennzeichnet, dass** der Finger (102) auf einem freien Rand (107) wenigstens eine Nase (108, 109) aufweist, die dazu bestimmt ist, gegen eine Rippe (110) in Anschlag zu gelangen, die auf der Wand (101) vorgesehen ist, um den Finger in der versenkten Stellung festgeklemmt zu halten.

7. Zubehör (100) nach einem der Ansprüche 1 bis 6,
**dadurch gekennzeichnet, dass** eine Deckleiste (120) vorgesehen ist, die dazu bestimmt ist, die Wand sowie den Rand (18a) des Deckelabschnitts (18) und einen Rand (18a) eines anderen Elements (18') zu bedecken, welche beiderseits des Fingers an diesen angrenzend positioniert sind, um zwischen dem Deckelabschnitt und dem Element einen kontinuierlichen Verlauf der äußeren Wand zu bilden.

8. Zubehör (100) nach Anspruch 7,
**dadurch gekennzeichnet, dass** der Finger (102) eine Breite aufweist, die so festgelegt ist, dass ein ausreichender Zwischenraum zwischen den Rändern (18a, 18'a) verbleibt, um das Einrasten der Deckleiste (120) auf der Wand (101) zu ermöglichen.

9. Zubehör (100) nach einem der Ansprüche 7 oder 8,
**dadurch gekennzeichnet, dass** die Deckleiste (120) auf einer zur Wand (101) gerichteten Innenseite (121) eine Rippe (122) aufweist, die den Finger (102) bei ihrer Anbringung in die Wand (101) zu versenken vermag.

10. Zubehör (100) nach einem der Ansprüche 7 oder 8,
**dadurch gekennzeichnet, dass** die Deckleiste auf einer zur Wand gerichteten Innenseite eine Lagerung zur Aufnahme des aus der Wand vorstehenden Fingers bei ihrer Anbringung aufweist.

11. Zubehör (100) nach einem der vorhergehenden Ansprüche,
**dadurch gekennzeichnet, dass** es eine Deckelverbindung bildet, die quer auf dem Sockel (11) des Kabelkanals (12) solchermaßen angebracht ist, dass zwischen zwei sich überlagernden Deckelabschnitten (18, 18') ein kontinuierlicher Verlauf hergestellt wird.

12. Zubehör (100) nach Anspruch 11,
**dadurch gekennzeichnet, dass** es an jedem quer verlaufenden äußeren Rand (111, 112) eine Lasche (113, 114) aufweist, die mit einem Rastzahn (113a, 114a) versehen ist, der dazu bestimmt ist, elastisch in eine Kabelführung (13, 14) des Sockels (11) des Kabelkanals (12) eingeführt zu werden.

13. Zubehör (100) nach Anspruch 12,
**dadurch gekennzeichnet, dass** eine der Rastlaschen (113) ein gebogenes Profil aufweist, das einen kontinuierlichen Profilverlauf mit der den vorstehenden Finger (102) tragenden Wand (101) herstellt, so dass die Lasche einen umgebogenen Rand der Wand bildet.

14. Zubehör (100) nach einem der Ansprüche 11 bis 13,
**dadurch gekennzeichnet, dass** die Wand (101) auf ihrer Rückseite (101b) einen Bolzen (116) trägt, der mit einem an jedem Ende offenen Kanal (117) durchbohrt ist und einen Schacht zur Aufnahme einer Schraube zum Befestigen der Wand auf dem Sockel des Kabelkanals bildet.

15. Zubehör (100) nach einem der Ansprüche 1 bis 10,
**dadurch gekennzeichnet, dass** es ein Kabelkanalendstück mit einer die Wand tragenden Seitenwange (130) bildet, derart, dass diese quer zur Seitenwange verläuft.

16. Zubehör (100) nach Anspruch 15,
**dadurch gekennzeichnet, dass** die Wand (101) Mittel zum Einrasten einer Deckleiste (120) umfasst, die dazu bestimmt ist, zwischen dem äußeren Rand der Seitenwange (130) des Endstücks und dem Ende des Deckelabschnitts einen kontinuierlichen Wandverlauf herzustellen, sowie ein Mittel zum seitlichen Halten der auf der Wand (101) eingerasteten Deckleiste (120)

17. Zubehör (100) nach Anspruch 16,
**dadurch gekennzeichnet, dass** die Rastmittel Rastkerben (131,132) aufweisen, die mit den von der Innenseite (121) der Deckleiste (120) getragenen Rastzähnen (123, 124) zusammenwirken, und das Haltemittel eine Öffnung (133) aufweist, die einen Zapfen (126) aufnimmt, der an der Innenseite (121) der Deckleiste (120) vorsteht.
